# EUROPEAN PATENT APPLICATION

(11) **EP 4 339 165 A1**
(43) Date of publication of application: **20.03.2024**
(21) Application number: 22196202.0
(22) Date of filing: 16.09.2022
(51) Int. Cl.: C02F 1/42, C02F 1/467, C02F 101/20, C02F 101/22, C02F 103/16

(54) **SEPARATING A FOREIGN METAL FROM A PROCESS FLUID, METHOD AND APPARATUS**

(71) Applicant: AT & S Austria Technologie & Systemtechnik Aktiengesellschaft, 8700 Leoben-Hinterberg (AT)
(72) Inventor: Kern, Konstantin, 8700 Leoben (AT); Oberhammer, Manuel, A-8700 Leoben (AT); Klocek, Jolanta, 8712 Niklasdorf (AT); Gross, Friedrich, 8700 Leoben (AT); Zanker, Andreas, 8753 Fohnsdorf (AT); Trinkl, Florian, 8700 Leoben (AT); Moitzi, Heinz, 8740 Zeltweg (AT); Ebinger, Christoph, 70599 Stuttgart (DE); Dragoi, Andreas, 8600 Bruck an der Mur (AT)
(74) Representative: Dilg, Haeusler, Schindelmann Patentanwaltsgesellschaft mbH

(57) **Abstract**

There is described a method of processing a metal-containing fluid (101), the method comprising:
i) providing the metal-containing fluid (101) that comprises at least one metal in a first oxidation state;
ii) performing a membrane electrolysis (110), thereby oxidizing the metal from the first oxidation state to a second oxidation state to obtain an oxidized metal-containing fluid (102); and thereafter
iii) streaming the oxidized metal-containing fluid (102) through an ion exchange device (120), thereby separating the metal in the second oxidation state from the oxidized metal-containing fluid (102) to obtain a processed metal-containing fluid (105).

## Description

### Field of the Invention

The invention relates to a method of processing a metal-containing fluid method in a component carrier manufacture plant, in particular so that a foreign metal is separated from the fluid. The method preferably comprises a membrane electrolysis step and an ion exchange step. Further, the invention relates to an apparatus for processing the metal-containing fluid. Additionally, the invention relates to a specific use of membrane electrolysis and ion exchange, as well as a specific use of the obtained processed fluid.

Thus, the invention may relate to the technical field of manufacturing component carriers such as printed circuit boards and IC substrates.

### Technical Background

In the context of growing product functionalities of component carriers equipped with one or more electronic components and increasing miniaturization of such electronic components as well as a rising number of electronic components to be mounted on the component carriers such as printed circuit boards, increasingly more powerful array-like components or packages having several electronic components are being employed, which have a plurality of contacts or connections, with ever smaller spacing between these contacts. Removal of heat generated by such electronic components and the component carrier itself during operation becomes an increasing issue. Also an efficient protection against electromagnetic interference (EMI) becomes an increasing issue. At the same time, component carriers shall be mechanically robust and electrically and magnetically reliable so as to be operable even under harsh conditions. In particular, efficiently and at the same time economically manufacturing a component carrier may still be considered a challenge.

The production process of a component carrier comprises in general a plating process. The term "plating" may denote the electrochemical deposition of metallic precipitates on component carrier preforms, such as circuit board and/or substrate preforms on which the metallic precipitate (e.g. copper) may serve as electrically conductive layer structure and/or conductor trace, for example. Furthermore, e.g. holes (vias) can be made electrically conductive by laterally plating them or by completely filling them by plating.

In an example of a plating process, a current is applied to an electrolytic bath. At the positive pole (anode), the metal which shall be disposed is located (e.g. copper or nickel), and at the negative pole (cathode), the object to be coated is located (e.g. a circuit board). By the electric current, the metal ions deposit on the object to be coated by reduction.

Additionally, a plating process may be used in a component carrier manufacture to purify a specific metal, e.g. copper, by depositing it at the cathode as elementary metal. Hereby, for a example, a copper purity of up to 99.9% or even 99.99% may be reached.

However, metal-containing process fluids applied during the component carrier manufacture may not only contain the metal to be plated/purified, but also foreign (undesired) metal(s), potentially in a high concentration. Said foreign metal may hamper or even prevent a high quality coating/purification during plating.

For example, the presence of iron in an electrolytic bath (wherein a metal-containing process fluid would be used as the electrolyte) may reduce the efficiency of electrolytic deposition of copper significantly, for example by 30%. Additionally, the operational safety may be lowered due to a low adhesion of metal (e.g. copper) to the cathode in the presence of iron. Especially the Fe³⁺ oxidation state of iron may hamper an efficient electrolytic deposition of copper due a chemical reaction with the copper already deposited on the cathode. Said chemical reaction may be illustrated by the following formula:
2 Fe³⁺ + Cu (deposited at the cathode) -> 2 Fe²⁺ + Cu²⁺ (back in solution).

This reaction (and others) clearly leads to adhesion problems of deposited copper on the cathode due to etching of the deposited copper film.

Above, the specific case of iron and copper has been described, but other foreign metals may also hamper or even prevent an efficient electrochemical coating/purification plating process.

### Summary of the Invention

There may be a need to efficiently perform a plating process, in particular in a component carrier manufacture process.

A method, an apparatus, and two specific methods of using are described in the following.

According to an aspect of the invention, there is described a method of processing a metal-containing (process) fluid, the method comprising:
i) providing the metal-containing fluid that comprises at least one (foreign) metal in a first oxidation state (to a membrane electrolysis process);
ii) performing a membrane electrolysis, thereby oxidizing the metal from the first oxidation state (e.g. Fe²⁺) to a second oxidation state (e.g. Fe³⁺) (being higher than the first oxidation state) to obtain an oxidized metal-containing fluid; and thereafter
iii) streaming the oxidized metal-containing fluid through an ion exchange device (in particular comprising an ion exchange resin), thereby separating the metal in the second oxidation state (at least partially) from the oxidized metal-containing fluid to obtain a processed metal-containing fluid (from which the metal in the second oxidation state is partially or completely removed).

According to a further aspect of the invention, there is described an apparatus for processing a metal-containing fluid that comprises at least one metal in a first oxidation state (for example according to a method as described above), the apparatus comprising:
i) a membrane electrolysis device configured for oxidizing the metal from the first oxidation state to a second oxidation state to obtain an oxidized metal-containing fluid; and
ii) an ion exchange device, arranged in process direction downstream of the membrane electrolysis device, and configured to separate the metal in the second oxidation state to obtain a processed metal-containing fluid.

According to a further aspect of the invention, there is described a use (method of using) of membrane electrolysis to oxidize a metal in a metal-containing fluid from a first oxidation state to a second oxidation state and of an ion exchange device to separate the metal in the second oxidation state afterwards.

According to a further aspect of the invention, there is described a use (method of using) a processed metal-containing fluid, that has been processed as described above, as an electrolyte for a high-quality electrolysis (plating) process.

According to a further aspect of the present invention, a process control device for regulating the above described method and/or the above described device is discussed. The process control device comprises:
i) a database for capturing at least one process parameter (and an actual value, respectively), in particular a plurality of process parameters, from the running process,
ii) a data model unit which is adapted for storing at least one predetermined process parameter (and a target value, respectively), in particular a plurality of predetermined process parameters, and iii) a calculation device which is adapted for
   a) comparing the captured process parameter with the predetermined process parameter (and the pluralities with each other, respectively),
   b) determining a control operation which is based on the result of the comparison (for example actively compensating a difference between the actual value and the target value), and c) performing the predetermined control operation (e.g. adapt a flow rate, etc.).

According to a further aspect of the present invention, a computer program product for controlling a method for manufacturing component carriers is described, which computer program product, when it is executed by one or more processors (and one or more computers, respectively), controls the method (as described above) and/or the device (as described above) and/or the process control device (as described above).

In the context of the present document, the term "metal-containing fluid" may in particular refer to a fluid that contains metal, in particular heavy metal. In an example, the metal-containing fluid may be applied as an electrolyte for an electrolysis (in particular plating) process. In a further example, the metal-containing fluid may be a waste fluid to be purified (in particular with respect to metal/copper recycling).

The metal-containing fluid may comprise at least one of the following (desired) metals: copper, nickel, cobalt, palladium, rhodium, tin, zinc, cadmium, magnesium, sodium, silver, gold. Further, the metal-containing fluid may comprise at least one of the following (undesired, foreign) metals: iron, lead, tin, molybdenum, nickel, cobalt, indium, cadmium, zinc, chromium, manganese palladium. Depending on the circumstances, a specific metal may be desired (to be concentrated) or undesired (to be separated).

The metal-containing fluid may be aqueous and/or comprise an acid, for example one of sulfuric acid, hydrochloric acid, nitrous acid, phosphoric acid and/or a metal salt, e.g. sulfate, chloride, nitrate, or phosphate. In an example, the metal salt-containing medium origins from the manufacture of circuit boards and/or substrates and may comprise corresponding residues. In a further example, the metal-containing fluid may be organic, for example comprising ethanol or ethylene glycol.

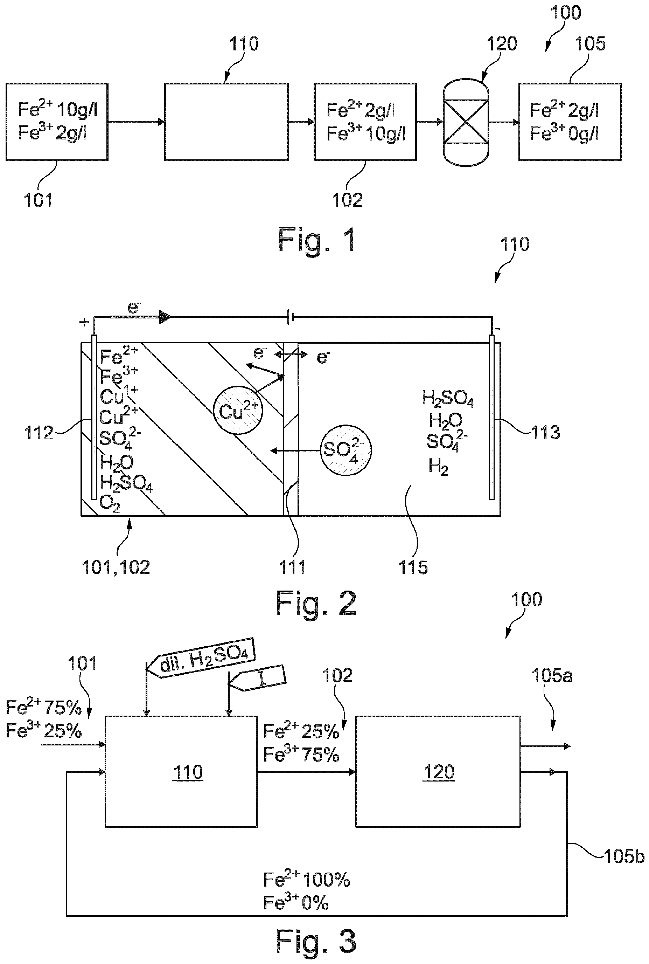

In the context of the present document, the term "oxidized metal-containing fluid" may in particular refer to a metal-containing fluid as described above, with the difference that an oxidation (in particular using membrane electrolysis) has been performed so that at least one metal has been oxidized from a first oxidation state to a second oxidation state. In a specific example (see Figure 1), a metal-containing fluid comprises 10 g/l of Fe²⁺ and 2 g/l of Fe³⁺, while, after said oxidation step, the oxidized metal-containing fluid comprises 2 g/l of Fe²⁺ and 10 g/l of Fe³⁺.

In the context of the present document, the term "processed metal-containing fluid" may in particular refer to a (oxidized) metal-containing fluid as described above, with the difference being that a separation step has been performed to separate (at least partially) the metal in the second oxidation state from the oxidized metal-containing fluid (in particular using an ion exchanger). Hence, the term "processed metal-containing fluid" may refer to an oxidized metal-containing fluid that has been significantly depleted by at least one specific metal after a specific separation step. Accordingly, the oxidized metal-containing fluid and the processed metal-containing fluid differ in their chemical composition and cannot be considered as the same fluid.

In the context of the present document, the term "membrane electrolysis" may in particular refer to an electrolysis process, wherein the anode and the cathode are spatially separated by one or more membranes. For example, the membrane may separate an anode chamber with the anode (electrode) from a cathode chamber with a cathode (further electrode). The electrolyte may hereby stream through the membrane, while the membrane may be selective for specific ions. In an example, the membrane may be a semipermeable membrane that is permeable for anions (negatively charged ions) but impermeable for cations (positively charged ions), in particular metal ions. In an example, the metal ions are concentrated in the anode chamber and are at least partially oxidized at the anode.

In this document, the term "heavy metal" may in particular denote a metal which comprises a density larger than 5,0 g/cm³ (alternatively larger than 4,5 g/cm³). This includes e.g. copper, nickel, cobalt, gold, silver, palladium, tungsten, tin, zinc, iron, lead, chromium, rhodium, cadmium, etc. According to this definition, aluminum, silicon, sodium, potassium, calcium, magnesium, etc. are not denoted as heavy metal, for example.

In the context of this document, the term "ion exchange" may in particular denote any process that is suitable for exchanging ions of a fluid (liquid). The term "ion exchanger" may encompass materials (and devices, respectively) by which dissolved ions can be replaced by other ions of the same charge (positive or negative) (see detailed description further below). Ion exchange may be considered a physico-chemical process with the aim of removing dissolved ionized substances. This method may exploit the ability of a substance to absorb/adsorb ions from a liquid and to release an equivalent amount of other equally charged ions. The exchangeable groups consist of fixed ions and free-moving oppositely charged counterions. These counterions can be exchanged against the ions from the solution, whereby the occurring reactions may be carried out according to stoichiometric laws. Ion exchange materials may be configured as bead-shaped materials (in particular for resins) or as membranes (in particular for electrodialysis).

According to an embodiment, the ion exchange comprises applying an ion exchanger, in particular wherein the ion exchanger comprises an ion exchange resin. Ion exchangers may be realized e.g. as columns which are filled with an ion exchange material, or as membranes through which a solution streams. The ions to be exchanged are bound and adsorbed, respectively, at the ion exchange material. In an example, an ion exchanger comprises a selective ion exchange resin, further in particular a double-functionalized ion exchange resin. In an example a plurality of ion exchangers may be assembled in a cascade.

In the context of this document, the term "regenerating" may in particular denote that a (selective) ion exchanger is transferred from a first operating state to a second operating state. In particular, in the first operating state, a metal (in particular a cation) is adsorbed at the ion exchanger (and ion exchange resin, respectively). Further in particular, in the second operating state, the metal is substantially desorbed. Thus, in the second operating state, the ion exchanger may be operable to be loaded again and may correspondingly assume the first operating state again. Advantageously, regenerating may be repeated multiple times. In an example, regenerating is performed by a regenerating medium, in particular a regenerating acid, such as sulfuric acid and/or hydrochloric acid. Alternatively, regenerating is performed by a regenerating medium comprising alkali metal salts. In regenerating, the regenerating medium may desorb absorbed/adsorbed metal. After purifying, the regenerating medium may be used again. In a further example, the regenerating medium does not have to be purified, so that the metal concentration in the regenerating medium increases with each (regenerating) cycle through the ion exchanger. In this way, in this document, "regenerating" may also be enriching a metal to be recovered. Moreover, in between the first operating state and the second operating step (and vice versa) a rinsing step (comprising water and/or acids) may be applied.

In the context of the present document, the term "oxidation state" (or oxidation number) may describe the degree of oxidation (loss of electrons) of an atom in a chemical compound. Conceptually, the oxidation state may be positive, negative or zero. In the present context, a second oxidation state is higher (i.e. a higher positive oxidation number) than a corresponding first oxidation state. The term "higher oxidation state" may or may not correspond to the highest possible oxidation state of an element. In this sense, a higher oxidation state may be such a state of oxidation of an element that allows its effective removal from a process liquid (metal-containing fluid).

In the context of this document, the term "foreign metal" may in particular denote a metal which is present in a metal-containing fluid (in a dissolved manner) but is not desired there (for certain applications). Depending on the application case, examples for such foreign metals (and their ions, respectively) may encompass: iron, lead, tin, molybdenum, nickel, cobalt, indium, cadmium, zinc, chromium, manganese, palladium.

In an embodiment, a metal-containing fluid shall be processed such that a specific metal such as copper is present after the processing in elementary state (i.e. metallic state)and can be recycled. The foreign metals may cause a disturbance or failure of the processing (e.g. by electrolysis), whereby a previous removal of the foreign metals may be recommended. In an exemplary embodiment, the metal-containing medium origins from a plating process and elementary copper shall be obtained. Due to the plating process, the metal-containing medium may comprise foreign metals, in particular iron. This may highly disturb the electrolysis of copper-comprising electrolyte e.g. copper sulfate (inhibits the copper deposition at the cathode).

In the context of this document, the term "process control device" may in particular denote each device (or plurality of devices) which are suitable for performing a process control, wherein the process (at least partially) concerns a circuit board and/or substrate manufacture. In particular, the process control device is adapted to (at least partially) control and regulate, respectively, a valuable material cycle, wherein residues of the production are fed back such that substantially no (heavy metal and/or acid) wastes occur. For this purpose, the process control device in particular may comprise a database (unit) and a data model unit, wherein the former stores captured processed data, while the latter stores intended desired process data. The process control device may be coupled with a multiplicity of sensors and measuring devices, to determine actual parameters at different process stations in this manner. Furthermore, the process control device may comprise a calculation device which compares the captured parameters with the desired ones and, based thereon, determines and performs a control operation. In a preferred embodiment, the process control device comprises a self-learning algorithm (AI) by which controlling and regulating, respectively, of the process can be continuously improved.

According to an exemplary embodiment, the invention may be based on the idea that an efficient electrolysis, in particular in a component carrier manufacture process, may be achieved, when foreign metal is separated by the specific steps of i) oxidation in a membrane electrolysis and ii) removal in a subsequent ion exchange process. The efficiency of a further electrolysis (plating) process may be significantly improved, when a foreign metal (ion) such as iron (Fe³⁺) is removed from the electrolyte.

Conventionally, a foreign metal may be selectively removed by an ion exchange process. However, it has now been surprisingly found by the inventors that the separation process can be highly improved, when the foreign metal is oxidized previously. Further, the inventors found that a membrane electrolysis functions surprisingly efficient for this oxidation process of metals in a metal-containing process fluid.

The described method hence chooses a completely different approach compared to the prior art: instead of keeping the amount of highly oxidized foreign metal (in particular Fe³⁺) as low as possible, an additional step is introduced to turn as much of the foreign metal as possible into the highly oxidized state (in other words: producing even more of the undesired Fe³⁺). The logic behind this step, which is conventionally avoided, is that it has been found that the higher oxidized state may be more easily and efficiently removable using the ion exchanger, in particular by a selective ion exchange resin.

Membrane electrolysis is generally used to separate a salt into its ions, the most common application being the extraction of sodium and chloride from sodium chloride salt. Using the membrane electrolysis, however, as a means for oxidizing metals to be thereby separated more efficiently in an ion exchange process is a completely new use of this technique.

In summary, established technologies (hence easy to implement) can be used and combined in a completely different manner as done previously to reach a surprisingly efficient metal separation and accordingly a highly efficient subsequent plating process.

### Exemplary Embodiments

According to an embodiment, the second oxidation state is the higher oxidation state of the metal (compared to the first oxidation state). In a further embodiment, the second oxidation state is the highest oxidation state of the metal. In an example, the "higher oxidation state" may or may not correspond to the highest possible oxidation state of an element. In this sense, a higher oxidation state is meant to be a desired state of oxidation of an element that allows its effective removal from the metal-containing fluid using an ion exchanger.

The higher oxidation state may further be an oxidation state that is higher than the general oxidation state (this would correspond to the first oxidation state) of an element, which general oxidation state most frequently occurs in an industrial environment, in particular a component carrier manufacture. For example, in said environment, iron is most frequently present as Fe²⁺.

According to a further embodiment, the (foreign) metal is at least one of iron, lead, tin, molybdenum, nickel, cobalt, indium, cadmium, zinc, chromium, manganese, palladium. Depending on the present circumstances, these metals may disturb an electrolysis (plating, in particular coating/purification) process, so that their removal may significantly improve said process.

According to a further embodiment, the first oxidation state is at least one of Fe²⁺, Cr⁴⁺, Ni²⁺, Mo³⁺, Pt²⁺, Mn²⁺, Hg¹⁺, Co²⁺. These may be the most frequently occurring oxidation states ("general oxidation state") of said elements in an industrial environment.

According to a further embodiment, the second oxidation state is at least one of Fe³⁺, Cr⁶⁺, Ni³⁺, Mo⁴⁺, Pt⁴⁺, Mn³⁺, Hg²⁺, Co³⁺. This second (higher) oxidation state may enable a significantly improved removal of the respective element by an ion exchanger.

According to a further embodiment, the membrane of the membrane electrolysis is a semipermeable membrane. According to a further embodiment, the membrane of the membrane electrolysis is permeable for anions and/or impermeable for cations. This may provide the advantage that an established technology can be directly applied for a new use, i.e. the oxidation of metal ions at the anode, thereby avoiding an undesired reduction of the metal ions at the cathode. In an example, the application of one to five membranes may be preferred. In a further example, the application of exactly two membranes may be preferred.

According to a further embodiment, the metal-containing fluid comprises a further metal (desired metal) that is (essentially) not oxidized during the membrane electrolysis. Depending on the present circumstances, these metals may include at least one of copper, nickel, cobalt, palladium, rhodium, tin, zinc, cadmium, magnesium, sodium, silver, gold. This further metal (not foreign metal) should not be removed by the ion exchange process. In turn, said further metal may be for example purified in an electrolysis process. As a consequence, it may be preferable that the circumstances are configured such that the further metal is not oxidized during membrane electrolysis.

In an example, further metals (that are not oxidized) should not interfere with the final processing (e.g. purification by electrolysis) and/or be a source for purification and recovering in said final process.

According to a further embodiment, the method further comprises providing the processed metal-containing fluid to an electrolysis process to purify the further metal. This may provide the advantage that the purification process may be performed in an especially efficient manner with a high yield.

The term "electrolysis" may in particular mean that an electric current is utilized, to enable a chemical redox reaction. Therefore, an electrolysis cell may comprise: a direct voltage source for providing the electric current, which is coupled with a cathode (minus-pole) and an anode (plus-pole). The voltage source may cause an electron deficiency in the anode and an electron excess in the cathode. In an embodiment, the processed metal-containing fluid is added to the electrolysis process/cell. The further metal (in particular copper) comprises the higher redox potential (is more noble) than other metals in solution and is thus reduced and deposited at the cathode.

In an example, the purified metal may be resupplied to a/the process for manufacturing circuit boards and/or substrates. In particular, the obtained elementary metal is fed back to a plating process.

In an example, the metal, in particular heavy metal, containing fluid substantially origins from at least one of three different treatment processes in the component carrier manufacture:
i) an etching process (e.g. etching of copper foils)
ii) a plating process (e.g. plating with copper layers),
iii) a rinsing process.

According to a further embodiment, the ion exchange device comprises an ion exchange resin, in particular a selective ion exchange resin. This may provide the advantage that an established technology can be directly applied for a new kind of use. Hence, a straightforward implementation in existing systems may be enabled.

According to a further embodiment, the ion exchange resin comprises a double-functionalized resin, in particular two acidic functional groups. In an example, one group comprises a higher pKa value than the other. In an example, the group comprises phosphonic and/or phosphoric acid and/or sulfonic acid.

In an example, the carrier material of the ion exchange resin of the ion exchanger comprises polystyrene. In a further example, the resin comprises in particular two functional groups (double-functionalized ion exchange resin), e.g. i) a phosphonic acid residue, and ii) a sulfonic acid residue. The first acid group comprises a higher pKa value than the second acid group. The acid with the higher pKa value is the weaker acid and more reluctantly undergoes a protolysis than the acid with the lower pKa value (strong acid). Thereby, during the regeneration, the foreign metal (e.g. iron) may be easier desorbed from the resin.

According to an embodiment, it has surprisingly turned out that the use of this specific ion exchange resin with the two functional groups enables an (efficient) adsorption/desorption of the iron. This is notably, in particular since (in particular single-functionalized) ion exchange resins partially tend to an irreversible adsorption of the iron.

In a specific embodiment, an ion exchange resin with microporous polystyrene crosslinked with divinylbenzene and spherical beads is applied.

According to a further embodiment, the method further comprises: regenerating the ion exchange device to desorb the metal in the second oxidation state (from the ion exchange resin). This may provide the advantage that the ion exchanger may be applied a plurality of times, thereby being more economic and environmentally friendly.

In the following, a specific embodiment with iron as the foreign metal is described. Nevertheless, the same principle may also apply to other metals. The iron, which is adsorbed at the ion exchanger, may be removed to be able to further utilize the ion exchanger. Regenerating may be performed by streaming an acid solution through the ion exchanger, which acid solution dissolves, i.e. desorbs, the iron. Correspondingly, the iron is present in a dissolved manner in the streamed acid solution as iron-containing acidic solution.

This iron-containing acidic solution may be further processed, for example in an acid dialysis process. The iron-containing acidic solution may be used for regenerating the ion exchanger multiple times. In an exemplary example, the iron-containing acidic solution may be used (up to) five to six times as regenerating medium, before it is used e.g. as precipitating agent. The iron-containing fluid from the regenerated ion exchanger (e.g. an acidic dialysate) may be used for a further process in the component carrier manufacture. Such a process may for example encompass precipitating a polymer-based photoresist (from a wastewater).

In an exemplary embodiment, an iron-containing fluid (from regeneration) comprises iron chloride (when the iron has been desorbed by hydrochloric acid). The FeCl₃ may e.g. be used for the treatment of alkaliresist-batches, where HCI may be applied to lower the pH-Level. Further, FeCl₃ may improve the flocculation.

In this respect, the regenerate may be used as a starting material for the (preferably continuous) production of iron chloride for precipitating polymer-based photoresist for the printed circuit boards and/or substrates.

Generally, photoresists consist of photo-active initiators and a resin, wherein the resin may be a functionalized polymer or a copolymer. Resins for positive resists are e.g. resists or phenol-formaldehyde-based polymers such as Novolac. As photo initiator, e.g. diazonaphthoquinone (mixture: DNQ-Novolac) may be used. Resins for negative resists encompass e.g. resins on epoxy-basis. Furthermore, there are also dry resists which are based on e.g. polyacrylates. In an embodiment, in particular dry resists can be especially efficiently precipitated.

According to a further embodiment, regenerating comprises: streaming an acid, in particular HCI, through the ion exchange device. It has been surprisingly found by the inventors that a strong acid, in particular HCI, may desorb the adsorbed metal in the second oxidation state especially efficient.

According to a further embodiment, a pressure (difference) is applied to the ion exchange device, in particular during adsorption mode and/or during desorption (regeneration) mode. This may provide the advantage that the ion exchange process can be more efficient.

According to a further embodiment, the method further comprises additionally treating the metal-containing fluid by electromagnetic radiation, more in particular UV, and/or chemical treatment. This may provide the advantage that oxidation of the metal in the membrane electrolysis is improved. A variety of further process steps may be applied that improve oxidation properties of the foreign metal. One example may be photocatalysis, which may refer to the acceleration of a photoreaction in the presence of a catalyst. In photocatalysis, photocatalytic active heavy metal (complexes) may be used that comprise e.g. Ir or Ru. In the same manner, iron may react.

According to a further embodiment, the metal-containing fluid is an electrolyte, in particular a wastewater, more in particular from an electric device manufacture, in particular component carrier manufacture, and/or a mining process. As described above in detail, the metal-containing fluid may be a process/waste fluid to be recycled.

Even though the examples described here are in the context of component carrier manufacture, the described concept may as well be applied in other industries, where metal-containing fluids are to be depleted from specific metals, for example in the mining industry. In the later, for example purification of zinc electrolytes or copper electrolytes may be of specific interest.

While above, embodiments have been described in particular for the example of copper and iron, a large variety of other metal combination may be advantageous as well, for example gold (Au¹⁺, Au³⁺) and copper (Cu²⁺), zinc (Zn²⁺) and iron (Fe³⁺), or silver (Ag⁺) and gold (Au¹⁺, Au³⁺).

According to a further embodiment, at least one of the metal-containing fluid, the oxidized metal-containing fluid, and the processed metal-containing fluid, has a pH value of 7 or lower, in particular 5 or lower, more in particular 2 or lower.

According to an exemplary embodiment, there is described an application of an electrochemical oxidation supported by a semipermeable membrane in combination with an ion exchanger to entirely remove oxidized iron ions (Fe3+) from a copper electrolyte before performing a copper electrolysis. Thereby, an effective removal of iron ions from the copper electrolyte followed by a more efficient electrochemical method of copper recovery may be achieved.

According to a further embodiment, the electrolyte, in particular the catholyte (electrolyte in direct contact with the cathode), may be (heavy) metal depleted (see also Figure 2).

In the context of this document, the term "(heavy) metal depletion" may, in an exemplary embodiment, refer to a concentration of a (heavy) metal concentration equal or less to: Cu⁺: 10 g/L, Cu²⁺: 70 g/L, Fe²⁺: 20 g/L, Fe³⁺: 20 g/L.

In an embodiment, the membrane may be exchanged (e.g. when blocked or at other circumstances) or recycled using a washing step comprising organic and/or inorganic acid(s) to maintain conditions which are required for proper use.

In an embodiment, the component carrier is configured as one of the group consisting of a printed circuit board, a substrate (in particular an IC substrate), and an interposer.

In an embodiment, the component carrier is shaped as a plate. This contributes to the compact design, wherein the component carrier nevertheless provides a large basis for mounting components thereon. Furthermore, in particular a naked die as example for an embedded electronic component, can be conveniently embedded, thanks to its small thickness, into a thin plate such as a printed circuit board.

In an embodiment, the component carrier stack comprises at least one electrically insulating layer structure and at least one electrically conductive layer structure. For example, the component carrier may be a laminate of the mentioned electrically insulating layer structure(s) and electrically conductive layer structure(s), in particular formed by applying mechanical pressure and/or thermal energy. The mentioned stack may provide a plate-shaped component carrier capable of providing a large mounting surface for further components and being nevertheless very thin and compact.

In the context of the present application, the term "printed circuit board" (PCB) may particularly denote a plate-shaped component carrier which is formed by laminating several electrically conductive layer structures with several electrically insulating layer structures, for instance by applying pressure and/or by the supply of thermal energy. As preferred materials for PCB technology, the electrically conductive layer structures are made of copper, whereas the electrically insulating layer structures may comprise resin and/or glass fibers, so-called prepreg or FR4 material. The various electrically conductive layer structures may be connected to one another in a desired way by forming holes through the laminate, for instance by laser drilling or mechanical drilling, and by partially or fully filling them with electrically conductive material (in particular copper), thereby forming vias or any other through-hole connections. The filled hole either connects the whole stack, (through-hole connections extending through several layers or the entire stack), or the filled hole connects at least two electrically conductive layers, called via. Similarly, optical interconnections can be formed through individual layers of the stack in order to receive an electro-optical circuit board (EOCB). Apart from one or more components which may be embedded in a printed circuit board, a printed circuit board is usually configured for accommodating one or more components on one or both opposing surfaces of the plate-shaped printed circuit board. They may be connected to the respective main surface by soldering. A dielectric part of a PCB may be composed of resin with reinforcing fibers (such as glass fibers).

In the context of the present application, the term "substrate" may particularly denote a small component carrier. A substrate may be a, in relation to a PCB, comparably small component carrier onto which one or more components may be mounted and that may act as a connection medium between one or more chip(s) and a further PCB. For instance, a substrate may have substantially the same size as a component (in particular an electronic component) to be mounted thereon (for instance in case of a Chip Scale Package (CSP)). In another embodiment, the substrate may be substantially larger than the assigned component (for instance in a flip chip ball grid array, FCBGA, configuration). More specifically, a substrate can be understood as a carrier for electrical connections or electrical networks as well as component carrier comparable to a printed circuit board (PCB), however with a considerably higher density of laterally and/or vertically arranged connections. Lateral connections are for example conductive paths, whereas vertical connections may be for example drill holes. These lateral and/or vertical connections are arranged within the substrate and can be used to provide electrical, thermal and/or mechanical connections of housed components or unhoused components (such as bare dies), particularly of IC chips, with a printed circuit board or intermediate printed circuit board. Thus, the term "substrate" also includes "IC substrates". A dielectric part of a substrate may be composed of resin with reinforcing particles (such as reinforcing spheres, in particular glass spheres).

The substrate or interposer may comprise or consist of at least a layer of glass, silicon (Si) and/or a photoimageable or dry-etchable organic material like epoxy-based build-up material (such as epoxy-based build-up film) or polymer compounds (which may or may not include photo- and/or thermosensitive molecules) like polyimide or polybenzoxazole.

In an embodiment, the at least one electrically insulating layer structure comprises at least one of the group consisting of a resin or a polymer, such as epoxy resin, cyanate ester resin, benzocyclobutene resin, bismaleimide-triazine resin, polyphenylene derivate (e.g. based on polyphenylenether, PPE), polyimide (PI), polyamide (PA), liquid crystal polymer (LCP), polytetrafluoroethylene (PTFE) and/or a combination thereof. Reinforcing structures such as webs, fibers, spheres or other kinds of filler particles, for example made of glass (multilayer glass) in order to form a composite, could be used as well. A semi-cured resin in combination with a reinforcing agent, e.g. fibers impregnated with the above-mentioned resins is called prepreg. These prepregs are often named after their properties e.g. FR4 or FR5, which describe their flame retardant properties. Although prepreg particularly FR4 are usually preferred for rigid PCBs, other materials, in particular epoxy-based build-up materials (such as build-up films) or photoimageable dielectric materials, may be used as well. For high frequency applications, high-frequency materials such as polytetrafluoroethylene, liquid crystal polymer and/or cyanate ester resins, may be preferred. Besides these polymers, low temperature cofired ceramics (LTCC) or other low, very low or ultra-low DK materials may be applied in the component carrier as electrically insulating structures.

In an embodiment, the at least one electrically conductive layer structure comprises at least one of the group consisting of copper, aluminum, nickel, silver, gold, palladium, tungsten, magnesium, carbon, (in particular doped) silicon, titanium, and platinum. Although copper is usually preferred, other materials or coated versions thereof are possible as well, in particular coated with supra-conductive material or conductive polymers, such as graphene or poly(3,4-ethylenedioxythiophene) (PEDOT), respectively.

At least one further component may be embedded in and/or surface mounted on the stack. The component and/or the at least one further component can be selected from a group consisting of an electrically non-conductive inlay, an electrically conductive inlay (such as a metal inlay, preferably comprising copper or aluminum), a heat transfer unit (for example a heat pipe), a light guiding element (for example an optical waveguide or a light conductor connection), an electronic component, or combinations thereof. An inlay can be for instance a metal block, with or without an insulating material coating (IMS-inlay), which could be either embedded or surface mounted for the purpose of facilitating heat dissipation. Suitable materials are defined according to their thermal conductivity, which should be at least 2 W/mK. Such materials are often based, but not limited to metals, metal-oxides and/or ceramics as for instance copper, aluminium oxide (Al₂O₃) or aluminum nitride (AIN). In order to increase the heat exchange capacity, other geometries with increased surface area are frequently used as well. Furthermore, a component can be an active electronic component (having at least one p-n-junction implemented), a passive electronic component such as a resistor, an inductance, or capacitor, an electronic chip, a storage device (for instance a DRAM or another data memory), a filter, an integrated circuit (such as field-programmable gate array (FPGA), programmable array logic (PAL), generic array logic (GAL) and complex programmable logic devices (CPLDs)), a signal processing component, a power management component (such as a field-effect transistor (FET), metal-oxide-semiconductor field-effect transistor (MOSFET), complementary metal-oxide-semiconductor (CMOS), junction field-effect transistor (JFET), or insulated-gate field-effect transistor (IGFET), all based on semiconductor materials such as silicon carbide (SiC), gallium arsenide (GaAs), gallium nitride (GaN), gallium oxide (Ga₂O₃), indium gallium arsenide (InGaAs), indium phosphide (InP) and/or any other suitable inorganic compound), an optoelectronic interface element, a light emitting diode, a photocoupler, a voltage converter (for example a DC/DC converter or an AC/DC converter), a cryptographic component, a transmitter and/or receiver, an electromechanical transducer, a sensor, an actuator, a microelectromechanical system (MEMS), a microprocessor, a capacitor, a resistor, an inductance, a battery, a switch, a camera, an antenna, a logic chip, and an energy harvesting unit. However, other components may be embedded in the component carrier. For example, a magnetic element can be used as a component. Such a magnetic element may be a permanent magnetic element (such as a ferromagnetic element, an antiferromagnetic element, a multiferroic element or a ferrimagnetic element, for instance a ferrite core) or may be a paramagnetic element. However, the component may also be a IC substrate, an interposer or a further component carrier, for example in a board-in-board configuration. The component may be surface mounted on the component carrier and/or may be embedded in an interior thereof. Moreover, also other components, in particular those which generate and emit electromagnetic radiation and/or are sensitive with regard to electromagnetic radiation propagating from an environment, may be used as component.

In an embodiment, the component carrier is a laminate-type component carrier. In such an embodiment, the component carrier is a compound of multiple layer structures which are stacked and connected together by applying a pressing force and/or heat.

After processing interior layer structures of the component carrier, it is possible to cover (in particular by lamination) one or both opposing main surfaces of the processed layer structures symmetrically or asymmetrically with one or more further electrically insulating layer structures and/or electrically conductive layer structures. In other words, a build-up may be continued until a desired number of layers is obtained.

After having completed formation of a stack of electrically insulating layer structures and electrically conductive layer structures, it is possible to proceed with a surface treatment of the obtained layers structures or component carrier.

In particular, an electrically insulating solder resist may be applied to one or both opposing main surfaces of the layer stack or component carrier in terms of surface treatment. For instance, it is possible to form such a solder resist on an entire main surface and to subsequently pattern the layer of solder resist so as to expose one or more electrically conductive surface portions which shall be used for electrically coupling the component carrier to an electronic periphery. The surface portions of the component carrier remaining covered with solder resist may be efficiently protected against oxidation or corrosion, in particular surface portions containing copper.

It is also possible to apply a surface finish selectively to exposed electrically conductive surface portions of the component carrier in terms of surface treatment. Such a surface finish may be an electrically conductive cover material on exposed electrically conductive layer structures (such as pads, conductive tracks, etc., in particular comprising or consisting of copper) on a surface of a component carrier. If such exposed electrically conductive layer structures are left unprotected, then the exposed electrically conductive component carrier material (in particular copper) might oxidize, making the component carrier less reliable. A surface finish may then be formed for instance as an interface between a surface mounted component and the component carrier. The surface finish has the function to protect the exposed electrically conductive layer structures (in particular copper circuitry) and enable a joining process with one or more components, for instance by soldering. Examples for appropriate materials for a surface finish are Organic Solderability Preservative (OSP), Electroless Nickel Immersion Gold (ENIG), Electroless Nickel Immersion Palladium Immersion Gold (ENIPIG), Electroless Nickel Electroless Palladium Immersion Gold (ENEPIG), gold (in particular hard gold), chemical tin (chemical and electroplated), nickel-gold, nickel-palladium, etc. Also nickel-free materials for a surface finish may be used, in particular for high-speed applications. Examples are ISIG (Immersion Silver Immersion Gold), and EPAG (Eletroless Palladium Autocatalytic Gold).

The aspects defined above and further aspects of the invention are apparent from the examples of embodiment to be described hereinafter and are explained with reference to these examples of embodiment.

### Brief Description of the Drawings

Figure 1 shows an apparatus for processing a metal-containing fluid according to an exemplary embodiment of the invention.
Figure 2 shows a membrane electrolysis device according to an exemplary embodiment of the invention.
Figure 3 shows an apparatus for processing a metal-containing fluid according to a further exemplary embodiment of the invention.

The illustrations in the drawings are schematic. In different drawings, similar or identical elements are provided with the same reference signs.

### Detailed Description of the Drawings

**Figure 1** shows an apparatus 100 for processing a metal-containing fluid 101 according to an exemplary embodiment of the invention. The metal-containing fluid 101 is a process fluid from a component carrier manufacture and comprises a plurality of metals that occur in the component carrier manufacture. In the example described here, the metal of interest is iron and is mainly present in the first oxidation state Fe²⁺ (here 10 g/l), while the amount of iron in a second oxidation state (here Fe³⁺ 2 g/l) is significantly lower.

The apparatus 100 comprises in the first place a membrane electrolysis device 110 configured for oxidizing the metal from the first oxidation state to a second oxidation state to obtain an oxidized metal-containing fluid 102. The membrane dialysis device 110 is shown in detail in Figure 2 and is described below. The oxidation in the membrane electrolysis step can be quite efficient, so that, in this specific example, the concentration of iron in the first oxidation state is decreased to 2 g/l, while the concentration of iron in the second oxidation state is increased to 10 g/l.

The apparatus 100 further comprises an ion exchange device 120, arranged in process direction downstream of the membrane electrolysis device 110, and configured to separate the metal in the second oxidation state to obtain a processed metal-containing fluid 105. The ion exchange device 120 comprises a selective ion exchange resin to which iron ions can efficiently adhere. It has been found that iron in the second oxidation state is adhered by the ion exchange resin significantly stronger than iron in the first oxidation state, so that the processed metal-containing fluid 105 comprises still a concentration of iron in the first oxidation state of 2 g/l, while iron in the second oxidation state has been completely separated.

**Figure 2** shows a membrane electrolysis device 110 according to an exemplary embodiment of the invention. The membrane electrolysis device 110 comprises a membrane 111 (in other embodiments 2 to 5 membranes are used) that separates an anode chamber (left side) from a cathode chamber (right side). The membrane 111 is a semipermeable membrane that is permeable for anions and impermeable for cations (in particular metal ions). The metal-containing fluid 101 is provided to the anode chamber and streams through the membrane 111 into the cathode chamber. Hereby, the anions pass the membrane 111, while the cations essentially remain in the anode chamber (very small cations such as H⁺ may still pass the membrane, but not (heavy) metal ions). In the metal-containing fluid, the metal is mainly present as a metal salt, for example copper sulfate and iron sulfate. This means that the cathode chamber will comprise a low metal concentration, but a high concentration of acids (H₂SO₄, SO₄²⁻), but also water and potentially hydrogen (anionic solution 115). In other words, the catholyte (electrolyte in direct contact with the cathode), is (heavy) metal depleted.

A current is established between the electrodes, so that there is provided an anode 112 in the anode chamber and a cathode 113 in the cathode chamber. The metal ions that remain in the anode chamber will be oxidized at the anode 112, in particular Fe²⁺ is oxidized to Fe³⁺. Other ions such as copper Cu²⁺ will not be further oxidized, however, Cu⁺ will be oxidized to Cu²⁺. Thereby, the oxidized metal-containing fluid 102 is produced in the anode chamber.

**Figure 3** shows an apparatus 100 for processing a metal-containing fluid according to a further exemplary embodiment of the invention. The apparatus 100 is comparable to the one described for Figure 1. In this specific example, the metal-containing fluid 101 comprises a concentration of 75% Fe²⁺ and 25% Fe³⁺, while the oxidized metal-containing fluid 102 comprises a concentration of 25% Fe²⁺ and 75% Fe³⁺. It is schematically shown that the membrane electrolysis device 110 is supported by diluted sulfonic acid and current (I). After the ion exchange step 120, there are two options of how to proceed further with the processed metal-containing fluid 105:
a) the processed metal-containing fluid 105 is treated as a final processed metal-containing fluid 105a and is streamed to an electrolysis process, for example to purify a specific metal, in particular copper,
b) the processed metal-containing fluid 105 is streamed back 105b to the membrane electrolysis device 110 for a further cycle of oxidation and ion exchange (or only ion exchange). This cycle can be repeated two or more times. With each cycle, the concentration of iron in the second oxidation state can be further decreased. In the example shown, a processed metal-containing fluid 105b with a concentration of 100% Fe²⁺ and (essentially) 0% Fe³⁺ (full separation) can be achieved.

### Reference signs

- 100: Apparatus
- 101: Metal-containing fluid
- 102: Oxidized metal-containing fluid
- 105: Processed metal-containing fluid
- 105a: Processed metal-containing fluid, final
- 105b: Processed metal-containing fluid, recycled
- 110: Membrane electrolysis device
- 111: Membrane
- 112: Anode
- 113: Cathode
- 115: Anion solution
- 120: Ion exchange device

## Claims

1. A method of processing a metal-containing fluid (101), the method comprising:
providing the metal-containing fluid (101) that comprises at least one metal in a first oxidation state;
performing a membrane electrolysis (110), thereby oxidizing the metal from the first oxidation state to a second oxidation state to obtain an oxidized metal-containing fluid (102); and thereafter
streaming the oxidized metal-containing fluid (102) through an ion exchange device (120), thereby separating the metal in the second oxidation state from the oxidized metal-containing fluid (102) to obtain a processed metal-containing fluid (105).

2. The method according to claim 1,
wherein the second oxidation state is the higher oxidation state of the metal.

3. The method according to any one of the preceding claims,
wherein the metal is at least one of iron, lead, tin, molybdenum, nickel, cobalt, indium, cadmium, zinc, chromium, manganese palladium;
wherein the first oxidation state is at least one of Fe²⁺, Cr⁴⁺, Ni²⁺, Mo³⁺, Pt²⁺, Mn²⁺, Hg¹⁺, Co²⁺;
wherein the second oxidation state is at least one of Fe³⁺, Cr⁶⁺, Ni³⁺, Mo⁴⁺, Pt⁴⁺, Mn³⁺, Hg²⁺, Co³⁺.

4. The method according to any one of the preceding claims,
wherein the membrane (111) of the membrane electrolysis (110) is a semipermeable membrane; and/or
wherein the membrane (111) of the membrane electrolysis (110) is permeable for anions and/or impermeable for cations.

5. The method according to any one of the preceding claims,
wherein the metal-containing fluid (101) comprises a further metal that is not oxidized during the membrane electrolysis (110),
in particular at least one of copper, nickel, cobalt, palladium, rhodium, tin, zinc, cadmium, magnesium, sodium, silver, gold.

6. The method according to claim 5, further comprising:
providing the processed metal-containing fluid (105) to an electrolysis process to purify the further metal.

7. The method according to any one of the preceding claims,
wherein the ion exchange device (120) comprises an ion exchange resin, in particular a selective ion exchange resin.

8. The method according to claim 7,
wherein the ion exchange resin comprises a double-functionalized resin, in particular two acidic functional groups, wherein one group comprises a higher pKa value than the other,
more in particular phosphonic acid and/or sulfonic acid.

9. The method according to any one of the preceding claims, further comprising:
regenerating the ion exchange device (110) to desorb the metal in the second oxidation state.

10. The method according to claim 9, wherein regenerating comprises:
streaming an acid, in particular HCI, through the ion exchange device (110).

11. The method according to any one of the preceding claims, further comprising:
additionally treating the metal-containing fluid (101) by electromagnetic radiation, more in particular UV, and/or chemical treatment.

12. The method according to any one of the preceding claims,
wherein the metal-containing fluid (101) is an electrolyte, in particular a wastewater, more in particular from an electric device manufacture, in particular component carrier manufacture.

13. An apparatus (100) for processing a metal-containing fluid (101) that comprises at least one metal in a first oxidation state, the apparatus (100) comprising:
a membrane electrolysis device (110) configured for oxidizing the metal from the first oxidation state to a second oxidation state to obtain an oxidized metal-containing fluid (102); and
an ion exchange device (120), arranged in process direction downstream of the membrane electrolysis device (110), and configured to separate the metal in the second oxidation state to obtain a processed metal-containing fluid (105).

14. Using membrane electrolysis (110) to oxidize a metal in a metal-containing fluid (101) from a first oxidation state to a second oxidation state and an ion exchange device (120) to separate the metal in the second oxidation state afterwards.

15. Using a processed metal-containing fluid (105), that has been processed according to claim 14, as an electrolyte for a high-quality electrolysis process.
